(19) Europäisches Patentamt / European Patent Office / Office européen des brevets

(11) **EP 2 555 128 A1**

(12) **EUROPEAN PATENT APPLICATION**

(43) Date of publication:
**06.02.2013 Bulletin 2013/06**

(51) Int Cl.:
***G06F 17/30*** *(2006.01)*

(21) Application number: **11290356.2**

(22) Date of filing: **02.08.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent
75007 Paris (FR)**

(72) Inventors:
• **De vriendt, Johan andre
Afsnee, 9051 (BE)**
• **De Vleeschauwer Danny
Evergem 9940 (BE)**
• **Verhoeyen, Marc
Oudenaarde, 9700 (BE)**
• **Steck, Harald
New Providence, NJ 07974 (US)**

(74) Representative: **Script IP Limited
Turnpike House
18 Bridge Street
Frome BA11 1BB (GB)**

(54) **Memory cache content manager and arrangement**

(57) A content manager manages content stored in a memory cache from which stored content is available to a plurality of consumers- The content manager is arranged to receive from recommendation apparatus respective information about recommended content for respective ones of said plurality of consumers, the recommended content for a consumer being individually adapted to that consumer. The content manager is arranged to combine the received respective information and to use results of the combining to determine which content is stored in the memory cache.

*FIG. 1*

**Description**

FIELD OF THE INVENTION

The present invention relates to a memory cache content manager and to an arrangement including such a content manager.

BACKGROUND

In Content Delivery Networks (CDNs), content is distributed from content sources, such as content providers or content authors, to consumers, who may themselves be content providers and/or owners, for example, by supplying the same content to others or content derived from that content.

Memory caches may be included in a CDN with the aim of reducing loading on network resources and reducing congestion on a network. A memory cache is a component that stores content to serve future content requests. Data stored within the cache is a copy of an original element that is stored elsewhere. If a consumer generates a request for an element stored in a cache, that request may be served by reading the cache without contacting the original data source. Thus caching may improve consumer experience, for example, by reducing latency.

BRIEF SUMMARY

According to a first aspect of the invention, a content manager manages content stored in a memory cache from which stored content is available to a plurality of consumers. The content manager is arranged to receive from recommendation apparatus respective information about recommended content for respective ones of said plurality of consumers, the recommended content for a consumer being individually adapted to that consumer- The content manager is arranged to combine the received respective information and to use results of the combining to determine which content is stored in the memory cache.

Recommendations are generated so as to guide consumers to content that is likely to be of interest to them. For example, in a recommendation engine for recommending content to a consumer, the recommendation engine may use information from a user profile store and from a content metadata store in making the recommendation. The recommendation engine may use other additional information, for example, a celebrity' choice of movies in the case of on demand video. The user profile may, for example, indicate content requested by the consumer previously so that similar content may be deemed of interest to that consumer, or content requested by other consumers with similar user profiles may be deemed to be of interest to the consumer. The recommendations may also be driven, for example, by content providers or other considerations. Newly available content, for example, may be arranged to be ranked more highly by a recommendation engine.

The present inventors have realized that recommendations made by recommendation apparatus may also be advantageously used to determine what content should be included in a cache serving a plurality of consumers. By basing the caching strategy on recommendations individually adapted to those consumers, content that is overall more likely to be requested due to the recommendations may be stored in anticipation. This may enable the content manager to efficiently manage content both for cases where only a few consumers access a cache and also where a large number of consumers access the cache.

In one embodiment, if a content item is recommended widely to a larger number of consumers, say, the content manager may determine that the content item should be stored in the cache at the expense of a content item recommended to fewer consumers. A content item given a strong recommendation for a few consumers may be determined by the content manager to be more usefully stored than a content item recommended to more consumers but having a less strong recommendation.

In an embodiment, a content manager is arranged to determine content for a single cache. The content manager may be incorporated with the memory cache or the content manager and memory cache may be separate components.

In another embodiment, the content manager is arranged to determine content to be stored in a plurality of caches. In one embodiment, one cache maybe accessible to one set of consumers and another cache to another different set of consumers and the content manager may manage content for one cache independently from content to be stored in the other cache. In another embodiment, the same plurality of consumers, or at least some of the plurality, accesses content from a plurality of caches for which content is determined by the content manager which may also take into account the distribution of content items between the plurality of caches.

Recommendations may be generated by recommendation apparatus using various strategies. For example, recommendations may be based on personalized profiles for individual consumers which may be inferred from monitoring a consumer's activities and building up a view of content items likely to be of interest to them and/or based on data supplied by a consumer relating to their interests. Other recommendations may involve recommending content items that a content item owner wishes to publicize or on some other basis. Recommendations may be generated by combining different recommendation strategies and/or recommendation data inputs.

Recommendation apparatus may be provided by a single entity or by a plurality of entities which operate independently or in conjunction with one another.

Recommendation systems emerged as an independent research area in the mid-1990s. Several techniques have been proposed for recommendation systems, and they are usually classified according to how recommendations are made. The main classifications arc Content based recommendations (CB) and Collaborative Filtering based recommendations (CF).

In Content based recommendations (CB) the user is recommended content items similar to ones previously preferred by the user preferred. Similarity of items may be judged based on attribute correlation. In Collaborative Filtering based recommendations (CF), a user is recommended content items that people with similar tastes and preferences have also liked. Two variants of Collaborative filtering can be distinguished. In User-based CF, items that were consumed by similar users are recommended to a user. Similarity of users can be calculated based on correlation of ratings (or item consumption) provided by those users for given items. In Item-based CF, items are recommended to a user because those items are similar to those previously consumed by the user. Similarity of items may be calculated based on probability that a user accessed both items, for example.

Hybrid recommendation approaches are often applied in order to overcome some limitations of either content-based or collaborative filtering based techniques. Some of these limitations are related to handling of new or anonymous users or users for which the user profile is sparse; and handling of new content or long-tail content.

Some recommendation strategies are described in the following articles: Adomavicius, Tuzhilin, 'Towards the next generation of recommender systems: a survey of the state-of-the-art and possible extensions', IEEE Trans. On Knowledge and Data Engineering, June 2005 and Koren, 'Factorization meets the neighborhood: a multifaceted collaborative Filtering model', KDD'08, August 2008, both of these articles being incorporated herein by reference.

Recommendation apparatus based on other recommendation strategies may alternatively or additionally be used in the present invention, the above discussions of recommendation strategies not being an exhaustive list of what may be employed.

In a typical recommendation apparatus, a list of content items is produced to be conveyed to the consumer. The present inventors have recognised that a significant amount of additional information internal to the recommendation apparatus may be beneficially used in a caching strategy. For example, to construct a list of recommended content, a recommendation apparatus may estimate user ratings or scores for content items under consideration, internal to the recommendation apparatus, which are then used to rank the items. Typically, only the top-ranked items are provided in the recommendation list shown to the consumer.

In one embodiment, recommended content for a consumer is provided as a list of ranked content items and the content manager is arranged to combine the received respective information for said plurality of consumers based on the ranking of content items to determine which content is stored in the memory cache. In an embodiment, each i-th content item in a ranked list for a consumer is given a weight of 1/i and the content manager combines weights for each content item by summing the weights for recommended content for said plurality of consumers to derive a summed weight and the content manager uses said summed weight for each respective content item in determining which content is stored in the memory cache.

In one embodiment, with the respective information received by the content manager for each consumer is a score associated with respective content items indicating the likelihood that that consumer will access the respective content item, and the content manager is arranged to combine the scores for each content item to derive a summed weight for the content item, and the content manager uses said summed weight for each respective content item in determining which content is stored in the memory cache. The score may be an indication of probability, for example, as there is a monotonic function between score and probability. A probability is a special case of a score but a score can be more general. For instance, probabilities are normalized to sum to one but probabilities could be multiplied, say, by a factor of two, so that the resultant summation of scores results in a total of two, but the scores still provides an indication of the likelihood that the content item will be accessed by the consumer.

In an embodiment, the content manager applies an individual weighting to a content item depending on at least one of the content item type and the particular consumer.

In an embodiment, the content manager receives data regarding popularity of a content item and uses the received data in determining which content is stored in the memory cache. Thus, both the recommendation information and the popularity data are used to determine what content should be stored in the memory cache. The content manager may use the received popularity data in combination with the received information to derive a summed weight for a content item, and the content manager determines which content is stored in the memory cache using said summed weight for each respective content item.

In an embodiment, the content manager uses the received recommendation information to determine which content is stored in a first part of the memory cache and uses the received popularity data to determine which content is stored in a second part of the memory cache.

In one embodiment, the content manager may receive feedback regarding what content is accessed by consumers from the memory cache and use the feedback to adapt which content is stored in the memory cache.

According to a second aspect of the invention, a content management arrangement comprises a content manager in accordance with the first aspect of the invention and a recommendation apparatus arranged to recommended content for respective ones of said plurality of consumers and provide recommendation information to the content manager. Recommendation apparatus may be provided by, for example, a dedicated unit, a general processor implementing appropriate software, several units acting together, a combination of these approaches or any other suitable means.

In one embodiment, the recommendation apparatus employs a recommendation algorithm to determine a score associated with respective content items to indicate the likelihood that a consumer will access the respective content item and sends to the content manager a list of content items with associated scores for respective ones of said plurality of consumers. In an embodiment, the recommendation apparatus sends to the content manager a ranked list of content items for respective ones of said plurality of consumers.

In an embodiment, the content management arrangement includes the memory cache for which stored content is determined by the content manager.

In an embodiment, the content management arrangement comprises a content manager in accordance with the first aspect of the invention and the memory cache for which stored content is determined by the content manager.

In an embodiment, the content management arrangement includes a popularity tracker for tracking popular content and providing data regarding popularity to the content manager.

BRIEF DESCRIPTION OF THE DRAWINGS

Some embodiments of the present invention will now be described by way of example only, and with reference to the accompanying drawings, in which:

Figure 1 schematically illustrates an arrangement in accordance with the invention;
Figure 2 schematically illustrates an aspect of the arrangement as shown in Figure 1 using rankings;
Figure 3 schematically illustrates an aspect of the arrangement as shown in Figure 1 using scores;
Figure 4 schematically illustrates an aspect of the arrangement as shown in Figure 1 using rankings, and combining recommendation information and popularity data; and
Figure 5 schematically illustrates an aspect of the arrangement shown in Figure 1 using scores, and combining recommendation information and popularity data.

DETAILED DESCRIPTION

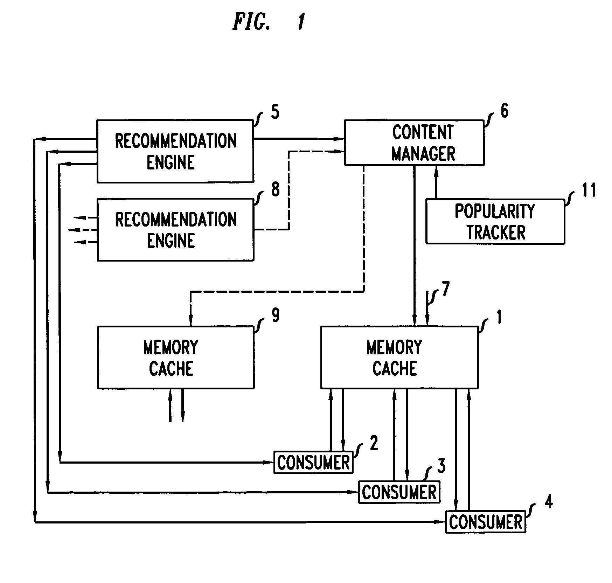

With reference to Figure 1, a content manager arrangement is included in a content delivery network and includes a memory cache 1 which stores content items of various kinds, such as video, for example, associated with video-on-demand, catch-up TV, internet TV, movies and so on. Other types of content may be included instead or in addition to those mentioned.

Consumers 2, 3 and 4, only some of which arc shown, receive recommendations from a recommendation engine 5 as a list of content items that may be of interest to them. By following links given with the recommended list, the consumers 2, 3 and 4 are able to access content items held in the memory cache 1. The recommendation list supplied by the recommendation engine 1 is individually adapted for consumers. Thus, in one example, all consumers may receive a recommendation for a newly released movie, or for a catch up service relating to a recently broadcast TV program, but one consumer additionally receives a recommendation relating to a newly released track by a recording artist that they have added to their personal profile whereas another consumer receives recommendations about other available media.

The content items held in the memory cache 1 are determined by a content manager 6. The content manager 6 instructs the cache I as to what content is to be stored and this is acquired via 7 from an appropriate source. The content manager 6 receives information about the recommendations made by the recommendation engine 5 for the consumers 2, 3 and 4, and uses this information in determining what content should be included in the cache 1, as described in greater detail below.

The content manager 6 is a separate component to the cache 1 but in another embodiment, may be incorporated with the cache 1, for example, as a processor or controller combined with a memory unit,

In another embodiment, consumers 2, 3 and 4 also receive recommendations from other recommendation engines, such as the second recommendation engine 8. The content manager 6 receives information from the second recommendation engine 8 and uses this in conjunction with the information from the recommendation engine 5 to determine what content items should be stored in the cache 1.

In another embodiment, the content manager 6 also determines what content should be included in other caches, such as a second cache shown at 9. The content items determined by the content manager 6 may take into account if the second cache 9 also serves the same consumers as those having access to the first memory cache 1, or if there is no overlap between consumers serviced by one cache and those by the other, or if there is some overlap.

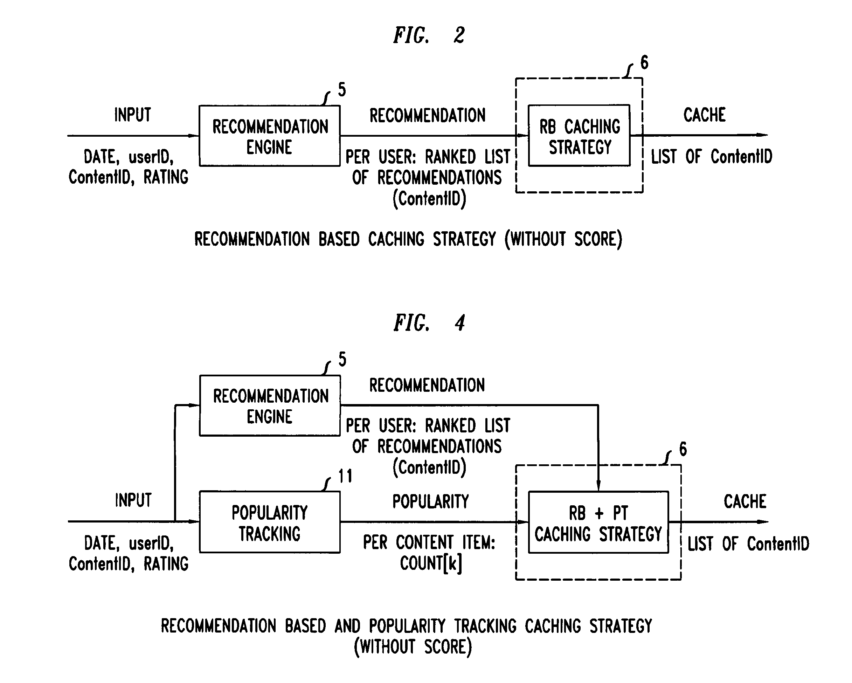

With reference to Figure 2, one caching strategy that may be employed by the content manager 6 is based on the ranking of content items for each consumer 2, 3 and 4, as provided by the recommendation engine 5. No additional information about the relative position of the items apart from the rank is available from the recommendation engine 5. Combining the ranked list of several users towards a single ranked list of items can then be done based on some heuristic ruling.

In one specific implementation that uses only ranking information, each i-th item in the list for a consumer is allocated a weight of $1/i$ by the content manager 6, the argument being that that particular content item is has a relevance to the consumer based on its ranking in the i-th place. These weights are then summed over all consumers to derive a weight_RB(k) for each content item k. Those items having a larger value for weight_RB(k) are stored in the cache 1 in preference to those having a smaller value. Not all content items k will be included in the recommendation lists for all consumers 2, 3 and 4 but the summation process takes this into account by resulting in a greater weighting for content recommended to more consumers, or more highly ranked.

In other embodiments, other monotonically decreasing functions in i may be used. For example, in one embodiment, each i-th item in the list for a consumer is allocated a weight of $1/(i+1)$. In another embodiment, each i-th item in the list for a consumer is allocated a weight of $1/i^b$ where b is a positive number and $i^b$ is i raised to the power b.

In Figure 2, in this embodiment, input data is applied to the recommendation engine and includes the date, so that, for example, more recent content items may be given priority over older content items depending on what recommendation strategy is adopted, user identification information, content identification information and a rating indicating the relevance of a content item to a consumer. In other embodiments, the recommendation engine 5 may not be presented with all of these types of input data in order to generate recommendations.

As in this embodiment, the cache manager 6 determines what content should be stored in the cache 1 based on rankings only, the information it receives from the recommendation engine 5 about recommended content for respective ones of the consumers 2, 3 and 4 includes, for each consumer, a ranked list of recommendations with the content identifier. The content manager 6 applies the combining procedure as set out above to provide a list of content identifiers to be sent to the memory cache 1.

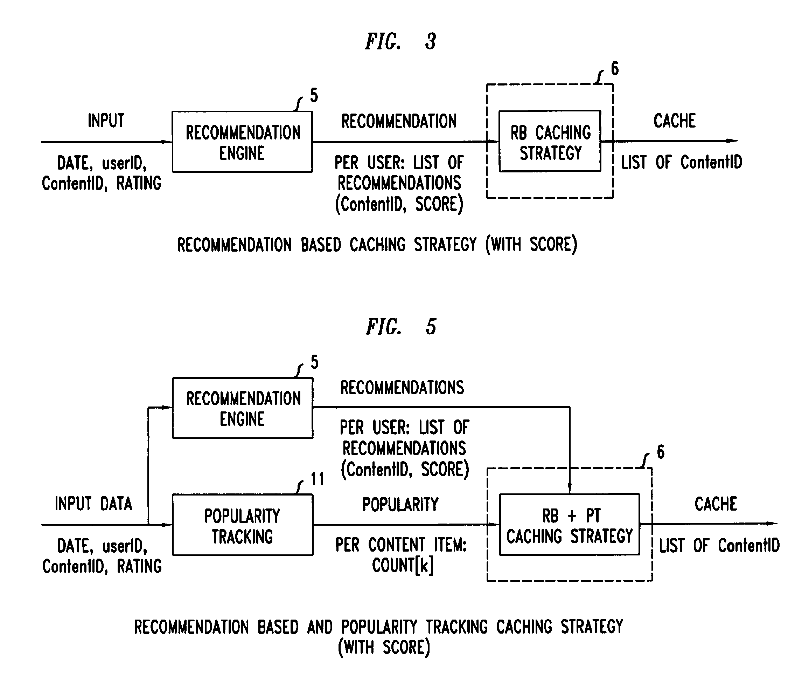

With reference to Figure 3, in another embodiment, a caching strategy that may be employed by the content manager 6 is based on the scores applied to content indicating the relevance of a content item to cach consumer 2, 3 and 4, as provided by the recommendation engine 5.

In one embodiment using scores, an assumption is made that the probability that the user will consume the item increases monotonically with the score the user would give to item k as estimated by the recommendation algorithm. Thus it is likely that an item that a consumer would give a higher score to will be consumed with a higher probability by that consumer. This (conditional) probability $p(s)$ can be measured or estimated as the ratio of items that had a score s and were requested by a consumer following a recommendation from the recommendation engine 5 and the number of items with a score s, and this is averaged over all consumers and all items. This (conditional) probability function $p(s)$ is then used to combine recommendation lists by calculating, for each item k, the sum over all consumers, which results in weight_RB(k), that is, a summed weighting for an item. These sums are then ranked and the items with largest weight_RB(k) are cached. Thus, as shown in Figure 3, in this embodiment, the scores are also made available to the content manager 6.

In the above embodiment based on scores, the assumption is made that the conditional probability function is independent from, that is, the same for, each consumer and content item. A generalisation to be considered is that the conditional probability function may be biased either per consumer or per content item. For example a consumer may either consistently give higher (or lower) ratings. The function $p(s)$, now depending on the user or content item, is measured similarly as above, but the averaging is restricted over the particular user or content item respectively.

Another embodiment based on scores associated with content items is that the recommendations are combined via a heuristic model. In such an embodiment, the conditional probabilities are not estimated, and the scores are used as a weighting factor.

In another embodiment, as illustrated by Figure 4, the content manager 6 adopts approach combines recommendation based (RB) and popularity tracking (PT) caching strategies. The content items to be stored in the cache 1 are determined by the content manager 6 combining both approaches. The arrangement shown in Figure 1. now includes a popularity tracker 11 which provides popularity data to the content manager 6.

In one more specific implementation that combines recommendation based and popularity tracking, the weights used for each caching strategy are combined in a linear way:

$$weight\_RB+PT(k) = lambda * weight\_RB(k) + (1- lambda) * weight\_PT(k).$$

The content items with highest weight_RB+PT(k) are then determined by the content manager 6 to be stored in the cache 1.

In another approach, part of the cache 1 is reserved (e.g. alpha*K, where K is the cache size) for the PT based caching strategy and complement the cache with items from the RB caching strategy that are not yet stored in the cache 1, or vice versa, that is, complement RB cached items with items to be stored based on PT.

For computing the weight_RB(k) to be combined with the PT strategy, one can use the ranked list only of recommendations, as shown in Figure 4. Alternatively, as shown in Figure 5, both the list of recommendations and their score may contribute to the RB aspect of the strategy. The parameter, for example, lambda or alpha, depending on implementation, may be tuned by tracking the hit ratio and (incrementally) changing it to optimise the hit ratio.

In the embodiments described above, information available in the recommender system is used for a better caching strategy, either for a strategy purely based on output of the recommender system or via a combination with popularity tracking caching strategies. This aims to reduce the bandwidth on feeder links, because of increased hit ratio, and better quality of experience for consumers as content delivery is from server closer to the consumers.

In addition to the embodiments described above, other strategies may be additionally combined with the techniques described. For example, combining information from the recommender system, possibly in combination with data from a popularity tracking system or any other caching strategy such as Least Recently Used (LRU) and Least Frequently Used (LFU) .

The functions of the various elements shown in the figures, including any functional blocks denoted as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

**Claims**

1. A content manager for managing content stored in a memory cache from which stored content is available to a plurality of consumers, wherein the content manager is arranged to receive from recommendation apparatus respective information about recommended content for respective ones of said plurality of consumers, the recommended content for a consumer being individually adapted to that consumer, and the content manager being arranged to combine the received respective information and to use results of the combining to determine which content is stored in the memory cache.

2. The content manager as claimed in claim 1 wherein recommended content for a consumer is provided as a list of ranked content items and the content manager is arranged to combine the received respective information for said plurality of consumers based on the ranking of content items to determine which content is stored in the memory cache.

3. The content manager as claimed in claim 2 wherein each i-th content item in a ranked list for a consumer is given a weight of 1/i and the content manager combines weights for each content item by summing the weights for recommended content for said plurality of consumers to derive a summed weight and the content manager uses said summed weight for each respective content item in determining which content is stored in the memory cache.

4. The content manager as claimed in claim 1 wherein the respective information received by the content manager for each consumer is a score associated with respective content items indicating the likelihood that that consumer will access the respective content item, and the content manager is arranged to combine the scores for each content item to derive a summed weight for the content item, and the content manager uses said summed weight for cach respective content item in determining which content is stored in the memory cache.

5. The content manager as claimed in claim 4 wherein the content manager applies an individual weighting to a content item depending on at least one of the content item type and the particular consumer.

6. The content manager as claimed in any preceding claim wherein the content manager receives data regarding popularity of a content item and uses the received data in determining which content is stored in the memory cache.

7. The content manager as claimed in claim 6 wherein the content manager uses the received data with the received information to derive a summed weight for a content item, and the content manager determines which content is stored in the memory cache using said summed weight for each respective content item.

8. The content manager as claimed in claim 6 wherein the content manager uses the received information to determine which content is stored in a first part of the memory cache and uses the received data to determine which content is stored in a second part of the memory cache.

9. The content manager as claimed in any preceding claim wherein the content manager receives feedback regarding what content is accessed by consumers from the memory cache and uses the feedback to adapt which content is stored in the memory cache.

10. A content management arrangement comprising a content manager as claimed in any of claims 1 to 9 and a recommendation apparatus arranged to recommended content for respective ones of said plurality of consumers and provide recommendation information to the content manager.

11. The content management arrangement as claimed in claim 10 wherein the recommendation apparatus employs a recommendation algorithm to determine a score associated with respective content items to indicate the likelihood that a consumer will access the respective content item and sends to the content manager a list of content items with associated scores for respective ones of said plurality of consumers.

12. The content management arrangement as claimed in claim 10 wherein the recommendation apparatus sends to the content manager a ranked list of content items for respective ones of said plurality of consumers.

13. The content management arrangement as claimed in claim 10, 11 or 12 and including the memory cache for which stored content is determined by the content manager.

14. The content management arrangement as claimed in claim 10, 11, 12 or 13 and including a popularity tracker for tracking popular content and providing data regarding popularity to the content manager.

15. A content management arrangement comprising a content manager as claimed in any of claims 1 to 9 and the memory cache for which stored content is determined by the content manager.

16. The content management arrangement as claimed in claim 15 and including a popularity tracker for tracking popular content and providing data regarding popularity to the content manager.

*FIG. 1*

## FIG. 2

INPUT

DATE, userID,
ContentID, RATING

RECOMMENDATION
ENGINE _r5_

RECOMMENDATION

PER USER: RANKED LIST
OF RECOMMENDATIONS
(ContentID)

RB CACHING
STRATEGY _r6_

CACHE

LIST OF ContentID

RECOMMENDATION BASED CACHING STRATEGY (WITHOUT SCORE)

## FIG. 4

RECOMMENDATION
ENGINE _r5_

RECOMMENDATION

PER USER: RANKED LIST
OF RECOMMENDATIONS
(ContentID)

INPUT

DATE, userID,
ContentID, RATING

POPULARITY
TRACKING _r11_

POPULARITY

PER CONTENT ITEM:
COUNT[k]

RB + PT
CACHING STRATEGY _r6_

CACHE

LIST OF ContentID

RECOMMENDATION BASED AND POPULARITY TRACKING CACHING STRATEGY
(WITHOUT SCORE)

## FIG. 3

INPUT → RECOMMENDATION ENGINE [5]

DATE, userID, ContentID, RATING

RECOMMENDATION

PER USER: LIST OF RECOMMENDATIONS (ContentID, SCORE)

RB CACHING STRATEGY [6]

CACHE

LIST OF ContentID

RECOMMENDATION BASED CACHING STRATEGY (WITH SCORE)

## FIG. 5

RECOMMENDATION ENGINE [5]

RECOMMENDATIONS

PER USER: LIST OF RECOMMENDATIONS (ContentID, SCORE)

INPUT DATA

DATE, userID, ContentID, RATING

POPULARITY TRACKING [11]

POPULARITY

PER CONTENT ITEM: COUNT[k]

RB + PT CACHING STRATEGY [6]

CACHE

LIST OF ContentID

RECOMMENDATION BASED AND POPULARITY TRACKING CACHING STRATEGY
(WITH SCORE)

Europäisches
Patentamt

European
Patent Office

Office européen
des brevets

# EUROPEAN SEARCH REPORT

Application Number

EP 11 29 0356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 111 517 A2 (XEROX CORP [US]) 27 June 2001 (2001-06-27) * abstract * * paragraph [0001] - paragraph [0011] * * paragraph [0014] - paragraph [0038] * ----- | 1-16 | INV. G06F17/30 |
| X | WO 99/17227 A1 (IBM [US]; IBM UK [GB]) 8 April 1999 (1999-04-08) * abstract * * page 1, line 3 - page 1, line 6 * * page 2, line 10 - page 2, line 19 * * page 2, line 44 - page 5, line 39 * * page 6, line 11 - page 7, line 12 * * page 12, line 14 - page 13, line 12 * * page 16, line 5 - page 16, line 8 * * page 18, line 37 - page 20, line 21 * * page 21, line 19 - page 23, line 4 * * page 24, line 14 - page 26, line 35 * ----- | 1-16 | |
| A | ALKESH PATEL ET AL: "Generic framework for recommendation system using collective intelligence", INTERNET TECHNOLOGY AND SECURED TRANSACTIONS, 2009. ICITST 2009. INTERNATIONAL CONFERENCE FOR, IEEE, PISCATAWAY, NJ, USA, 9 November 2009 (2009-11-09), pages 1-6, XP031621964, ISBN: 978-1-4244-5647-5 * abstract * * page 1, right-hand column, line 27 - page 1, right-hand column, line 42 * * page 2, left-hand column, line 9 - page 2, right-hand column, line 46 * * page 3, left-hand column, line 10 - page 5, right-hand column, line 14 * ----- | 1-16 | TECHNICAL FIELDS SEARCHED (IPC) G06F |

The present search report has been drawn up for all claims

| Place of search | Date of completion of the search | Examiner |
|---|---|---|
| The Hague | 29 November 2011 | Boyadzhiev, Yavor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 29 0356

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2011

| Patent document cited in search report | | Publication date | Patent family member(s) | | Publication date |
|---|---|---|---|---|---|
| EP 1111517 | A2 | 27-06-2001 | DE | 60029914 T2 | 18-01-2007 |
| | | | EP | 1111517 A2 | 27-06-2001 |
| | | | JP | 4662618 B2 | 30-03-2011 |
| | | | JP | 2001222459 A | 17-08-2001 |
| | | | US | 6415368 B1 | 02-07-2002 |
| | | | US | 2002147895 A1 | 10-10-2002 |
| WO 9917227 | A1 | 08-04-1999 | CA | 2302254 A1 | 08-04-1999 |
| | | | CN | 1272189 A | 01-11-2000 |
| | | | DE | 69834129 T2 | 12-10-2006 |
| | | | EP | 1018085 A1 | 12-07-2000 |
| | | | HU | 0003680 A2 | 28-02-2001 |
| | | | JP | 3526442 B2 | 17-05-2004 |
| | | | JP | 2001518668 A | 16-10-2001 |
| | | | PL | 339377 A1 | 18-12-2000 |
| | | | US | 6085193 A | 04-07-2000 |
| | | | WO | 9917227 A1 | 08-04-1999 |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ADOMAVICIUS ; TUZHILIN.** Towards the next generation of recommender systems: a survey of the state-of-the-art and possible extensions. *IEEE Trans. On Knowledge and Data Engineering,* June 2005

- **KOREN.** Factorization meets the neighborhood: a multifaceted collaborative Filtering model. *KDD'08,* August 2008